# EUROPEAN PATENT SPECIFICATION

(11) **EP 2 657 010 B1**
(45) Date of publication and mention of the grant of the patent: **06.04.2016**
(21) Application number: 11850048.7
(22) Date of filing: 22.12.2011
(51) Int. Cl.: B29D 30/30

(54) **METHOD OF MANUFACTURING PNEUMATIC TYRES**
VERFAHREN ZUR LUFTREIFENHERSTELLUNG
PROCÉDÉ DE FABRICATION DE PNEUMATIQUES

(30) Priority: 22.12.2010 JP 2010285460; 24.11.2011 JP 2011255876
(43) Date of publication of application: 30.10.2013
(73) Proprietor: The Yokohama Rubber Co., Ltd., Minato-ku Tokyo 105-8685 (JP)
(72) Inventor: SETO, Hideki, Hiratsuka-shi Kanagawa 254-8601 (JP); HARA, Yuichi, Hiratsuka-shi Kanagawa 254-8601 (JP); SHIBATA, Hirokazu, Hiratsuka-shi Kanagawa 254-8601 (JP)
(74) Representative: Global IP Europe Patentanwaltskanzlei
(86) International application number: PCT/JP2011/079909
(87) International publication number: WO 2012/086801

(56) References cited:
- CN-U- 201 511 410
- JP-A- 2009 528 178
- JP-A- 2010 137 820
- US-A- 3 789 712
- US-B1- 6 928 911

## Description

### TECHNICAL FIELD

The present invention relates to a method of manufacturing a pneumatic tire.

More specifically, the present invention relates to a method of manufacturing a pneumatic tire, which is capable of manufacturing a pneumatic tire having high durability without development of a crack around a splice portion of a spliced laminated sheet after the manufacture of the pneumatic tire, the method including the step of cutting a laminated sheet at a predetermined length, the laminated sheet being obtained by laminating a sheet made of a thermoplastic resin composition obtained by blending a thermoplastic resin and an elastomer, and rubber to be cured and adhered to the thermoplastic resin composition; splicing end portions of the laminated sheet; and further cure-molding the laminated sheet to form an inner liner layer.

### BACKGROUND ART

Document US 3789712 - A discloses an apparatus for cutting tire ply stock at a desired bias angle while the stock is supported on the top of a conveyor, said apparatus comprising a guide rail above the conveyor extending longitudinally in a direction parallel to such bias angle; a knife guided by said guide rail for reciprocation along a path above and parallel to such bias angle; reversible drive means on said guide rail operatively engaged with said knife to move it in opposite directions along said guide rail; lifting means on said guide rail movable downwardly to engage a portion of the length of the stock on opposite sides of the desired line of cutting thereof and upwardly to lift the stock into the path of movement of said knife whereby the stock is cut along such line upon movement of said knife in one direction along said guide rail.

Document US 6928911 - B discloses a method and apparatus for severing tire ply stock, the apparatus including a knife assembly utilizing a blade having a curved leading edge and a straight trailing edge which meet at a leading

Document CN 201511410 - U discloses a rubber cutting tool having an electrically heated cutting blade. The cutting tool is suitable for cutting rubber sheets at high speed with smooth cuts.

In recent years, proposals and studies have been made to use a sheet-shaped object made of a thermoplastic resin composition obtained by blending a thermoplastic resin and an elastomer, as an inner liner for a pneumatic tire. See for example Japanese patent application kokai publication JP 2009 241 855-A.

For actual use of the sheet-shaped object made of the thermoplastic resin composition obtained by blending the thermoplastic resin and the elastomer as the inner liner for the pneumatic tire, a manufacturing method is generally employed in which a laminated sheet including a sheet of the thermoplastic resin composition obtained by blending the thermoplastic resin and the elastomer, and a rubber (tie rubber) sheet to be cured and adhered to the sheet of the thermoplastic resin composition is wound around a tire making drum and lap spliced and is then cure-molded.

Consider, however, a case where a tire is manufactured by pulling out the laminated sheet including the thermoplastic resin composition obtained by blending the thermoplastic resin and the elastomer and a tie rubber layer, which has been wound into a rolled shape, by a predetermined length from the rolled shape and cutting the laminated sheet in the length, winding the laminated sheet around the tire making drum, lap splicing the laminated sheet on the drum, and further cure-molding the laminated sheet. In this case, after the tire starts to be used, delamination may occur between the sheet of the thermoplastic resin composition and the tie rubber sheet cured and adhered to the sheet of the thermoplastic resin composition, which collectively constitute the inner liner.

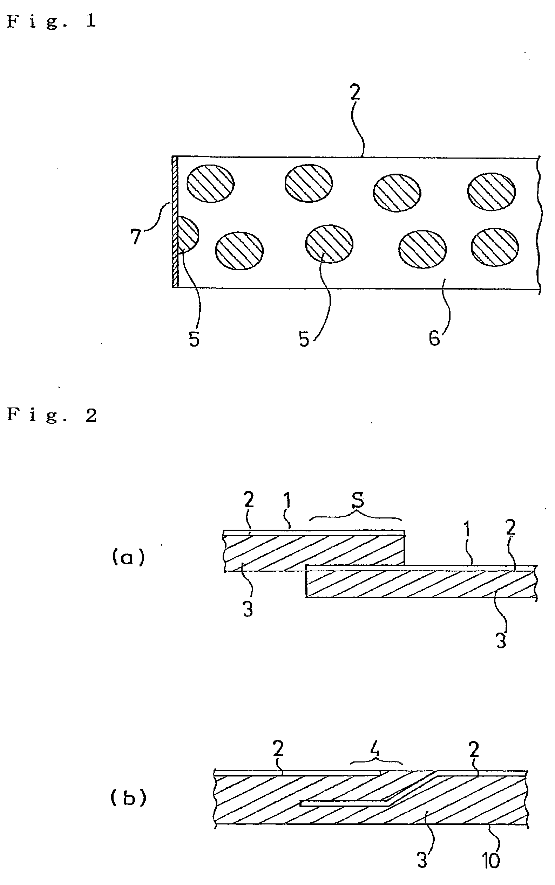

To explain this with drawings, as shown in Part (a) of Fig. 2, a laminated sheet 1 including a thermoplastic resin composition 2 obtained by blending a thermoplastic resin and an elastomer, and a tie rubber layer 3 is cut to a desired size (length) with an edge tool, for example. Then, the laminated sheet 1 is spliced on a tire making drum in such an annular shape that both end portions thereof form a lap splice portion S. Incidentally, the laminated sheet 1 includes a single laminated sheet 1 which, when used, is spliced at its ends to form an annular shape, and a plurality of laminated sheets 1 which, when used, are spliced together end to end of the sheets to form an annular shape.

Moreover, other parts (unillustrated) necessary for manufacturing the tire are wound and then cure-molding are performed with a bladder. As a result of the cure-molding, an inner liner layer 10 is formed which includes the thermoplastic resin composition 2 obtained by blending the thermoplastic resin and the elastomer, and the tie rubber layer 3, as shown in the view in Part (b) of Fig. 2 as a model. Around the splice portion S, the thermoplastic resin composition 2 forms a portion which is exposed and a portion which is buried inside the tie rubber layer.

The phenomenon in which the sheet of the thermoplastic resin composition 2 and the tie rubber sheet 3 cured and adhered thereto are delaminated from each other occurs particularly at a spot shown in Part (b) of Fig. 2 where the sheet of the thermoplastic resin composition 2 is exposed and also in the vicinity 4 of the tip of the sheet among others. In the beginning, a crack is developed, and the crack may further grow into the sheet delamination phenomenon.

### SUMMARY OF INVENTION

### TECHNICAL PROBLEM

In view of the above-mentioned circumstance, an object of the present invention is to provide a method of manufacturing a pneumatic tire having high durability, in which when a tire is manufactured by the method including: cutting a laminated sheet at a predetermined length, the laminated sheet being obtained by laminating a sheet made of a thermoplastic resin composition obtained by blending a thermoplastic resin and an elastomer, and rubber to be cured and adhered to the thermoplastic resin composition; lap splicing end portions of the laminated sheet; and further cure-molding the laminated sheet, delamination, after the tire starts to be used, does not occur between the sheet of the thermoplastic resin composition and the tie rubber sheet cured and adhered to the sheet of the plastic resin composition, which collectively constitute the inner liner layer.

### SOLUTION TO PROBLEM

A method of manufacturing a pneumatic tire of the present invention to achieve the above-described object has a configuration of (1) given below.
(1) A method of manufacturing a pneumatic tire as defined in claim 1, the method including the step of cutting a laminated sheet at a predetermined length, the laminated sheet being obtained by laminating a sheet made of a thermoplastic resin composition obtained by blending a thermoplastic resin and an elastomer, and rubber to be cured and adhered to the thermoplastic resin composition; lap splicing end portions of the laminated sheet; and further cure-molding the laminated sheet to form an inner liner layer, characterized in that the cutting of the laminated sheet to the predetermined length is effected by thermal cutting at a temperature equal to or higher than a melting point of the thermoplastic resin.
   Preferred embodiments of the method according to the invention are defined in the dependent claims.
   Also, it is preferable that the method of manufacturing a pneumatic tire of the present invention according to (1) described above have a configuration of any one of (2) to (7) given below.
(2) The method of manufacturing a pneumatic tire according to the above-described (1), characterized in that the thermal cutting is performed, and thermal cutting is performed on a cut surface obtained by the thermal cutting, in such a manner that heat of the thermal cutting causes the thermoplastic resin to flow out over the cut surface and cover the entire area of the cut surface including at least the elastomer present on the cut surface.
(3) The method of manufacturing a pneumatic tire according to the above-described (1) or (2), characterized in that a heat cutter is used for the thermal cutting.
(4) The method of manufacturing a pneumatic tire according to the above-described (3), characterized in that an electrically-heated wire cutter is used as the heat cutter.
(5) The method of manufacturing a pneumatic tire according to the above-described (3) or (4), characterized in that when the heat cutter is used for the thermal cutting, the thermal cutting is accomplished by causing the heat cutter to travel from one end to the other end of the laminated sheet, with the heat cutter in contact with a side face of the laminated sheet in such a way as to cross the laminated sheet, extending across space above and below the laminated sheet, and with the heat cutter inclined in a direction of travel of the heat cutter.
(6) The method of manufacturing a pneumatic tire according to the above-described (5), characterized in that the heat cutter, when traveling, is inclined at an angle θ of inclination of from 10° to 45° with respect to a perpendicular line to the laminated sheet.
(7) The method of manufacturing a pneumatic tire according to any one of the above-described (1) to (6), characterized in that the thermal cutting is a process which involves sharpening a side configuration of a tip of the sheet made of the thermoplastic resin composition, and the sharpened side configuration is such that a thickness T (mm) of the sheet at a position inward by a length of (t x 1/3) has a relationship satisfying 0.1t ≤ T ≤ 0.8t.

Here, t denotes an average thickness (mm), in a tire circumferential direction, of an unsharpened portion of the sheet made of the thermoplastic resin composition obtained by blending the elastomer in the thermoplastic resin, and T denotes the thickness (mm) of the sheet at the position inward by a length of (t x 1/3) from the tip of the sheet made of the thermoplastic resin composition obtained by blending the elastomer in the thermoplastic resin.

### ADVANTAGEOUS EFFECTS OF INVENTION

According to the present invention according to claim 1, provided is a method of manufacturing a pneumatic tire having high durability such that after the tire starts to be used, delamination does not occur between the sheet of the thermoplastic resin composition and the tie rubber sheet cured and adhered to the sheet of the thermoplastic resin composition, which collectively constitute the inner liner layer.

The method of manufacturing a pneumatic tire of the present invention according to any one of claims 2 to 6 has the effect of the present invention according to claim 1 and can further achieve that effect with a higher degree of reliability and effectiveness.

### BRIEF DESCRIPTION OF DRAWINGS

[Fig. 1] Fig. 1 is a side view showing, as a model, a layer of a thermoplastic resin covering a thermally cut surface of a sheet of a thermoplastic resin composition obtained by blending the thermoplastic resin and an elastomer, which is useful in explaining the layer of the thermoplastic resin.
[Fig. 2] Part (a) of Fig. 2 is a view showing, as a model, a state where a laminated sheet has both ends thereof being lap spliced together, the laminated sheet being obtained by laminating a sheet made of a thermoplastic resin composition, and rubber to be cured and adhered to the thermoplastic resin composition, cutting the laminated sheet at a predetermined length and winding the laminated sheet around a tire making drum, and Part (b) of Fig. 2 is a view showing, as a model, a state after performing cure-molding in the state shown in Part (a) of Fig. 2.
[Fig. 3] Part (a) of Fig. 3 is a perspective view showing, as a model, a cutting method which may be particularly preferably employed when a heat cutter is used for thermal cutting of a laminated sheet 1, and Part (b) of Fig. 3 is a view showing, as a model, an embodiment of a tip 9 of a sheet of a thermoplastic resin composition 2 obtained by the cutting method.
[Fig. 4] Fig. 4 is a side view of assistance in explaining an embodiment of a pneumatic tire manufactured by the present invention, showing a side face of the sheet at the tip 9 of the sheet of the thermoplastic resin composition 2, after the sheet has been subjected to a tire cure-molding process.
[Fig. 5] Fig. 5 is a partial cutaway perspective view showing an example of an embodiment of the pneumatic tire manufactured by the present invention.

### DESCRIPTION OF EMBODIMENTS

Hereinbelow, a method of manufacturing a pneumatic tire of the present invention will be described further in detail.

A method of manufacturing a pneumatic tire of the present invention, including the step of cutting a laminated sheet at a predetermined length, the laminated sheet being obtained by laminating a sheet made of a thermoplastic resin composition obtained by blending a thermoplastic resin and an elastomer, and rubber to be cured and adhered to the thermoplastic resin composition; lap splicing end portions of the laminated sheet; and further cure-molding the laminated sheet to form an inner liner layer, is characterized in that the cutting of the laminated sheet to the predetermined length is effected by thermal cutting at a temperature equal to or higher than a melting point of the thermoplastic resin.

The inventors have made findings given below, as a result of having made various studies on causes of delamination between the sheet of the thermoplastic resin composition and the tie rubber sheet cured and adhered to the sheet of the thermoplastic resin composition, which collectively constitute the inner liner layer, as a disadvantage of the conventional method.

Specifically, when the above-described laminated sheet of the conventional method is cut with a commonly used edge tool and is then subjected to a tire manufacturing process, the elastomer such as butyl rubber in the thermoplastic resin composition, which is present in exposed form on a cut surface (a boundary surface) of the laminated sheet, may be considered to inhibit cure adhesion and hence lead to low cure adhesion force between the sheet of the thermoplastic resin composition 2 and the tie rubber sheet 3.

On the other hand, according to the method of the present invention, as shown in Fig. 1, the cutting of a laminated sheet 1 to the predetermined length is effected by thermal cutting at a temperature equal to or higher than a melting point of a thermoplastic resin 6, and thereby, the thermoplastic resin 6 melts and flows to form a coating layer 7 coating an elastomer 5 such as butyl present on a thermally cut surface, thus enabling elimination of the occurrence of the disadvantage that the presence of the elastomer 5 in exposed form causes the lowering of the cure adhesion between the sheet of the thermoplastic resin composition 2 and the tie rubber sheet 3.

Preferably, the thermal cutting is performed under conditions such that the thermoplastic resin 6 melting and flowing by heat of the thermal cutting can fully cover the entire area of the elastomer present on the cut surface. Specifically, it is preferable that the thermal cutting be performed at a cutting temperature within a range of from the melting point of the thermoplastic resin plus 30°C to the melting point of the thermoplastic resin plus 180°C. A lower cutting temperature than the above-described range may render it difficult for the thermoplastic resin to flow and hence render it difficult to apply a sufficient coating over the elastomer. Also, a higher cutting temperature than the above-described range is undesirable because it may lead to deterioration of the thermoplastic resin composition or the tie rubber sheet.

Preferably, a heat cutter or a laser is used for the thermal cutting. Using an electrically-heated wire cutter as the heat cutter for the thermal cutting is preferable because of being easy.

Also, pressure as well as heat may be applied for the cutting. Also, a mechanical edge tool may be used, provided that the cutting is possible with heat applied.

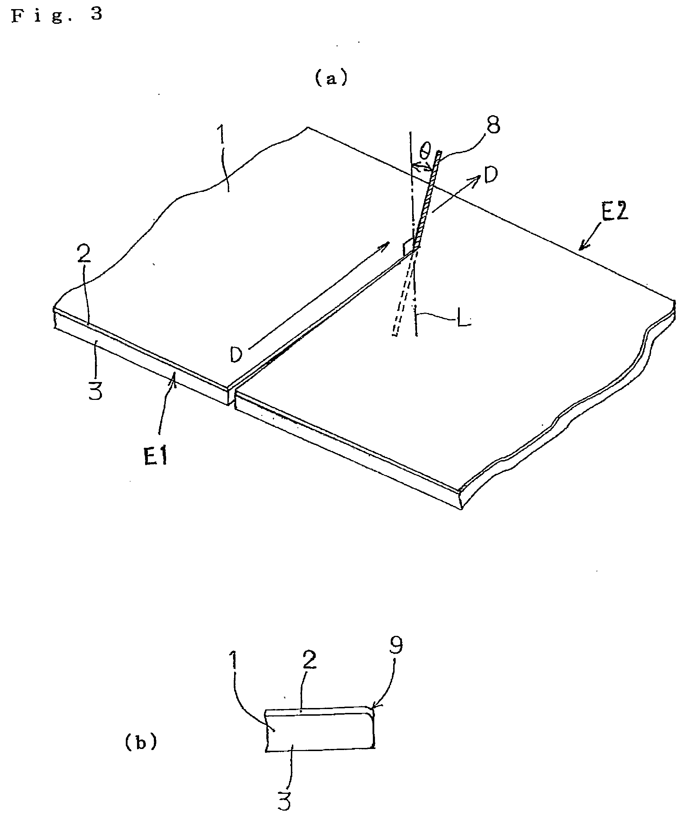

Part (a) of Fig. 3 shows a cutting method which may be particularly preferably employed when the heat cutter is used for the thermal cutting of the laminated sheet 1. Preferably, the method is employed in which the thermal cutting is accomplished by causing a heat cutter 8 to travel from one end E1 to the other end E2 of the laminated sheet 1, with the heat cutter 8 in contact with a side face of the laminated sheet 1 in such a way as to cross the laminated sheet, extending across space above and below the laminated sheet, and with the heat cutter 8 inclined at an angle θ of inclination in a direction D of travel of the heat cutter. According to the inventors' findings, when this method is employed, it is preferable that the heat cutter 8, when traveling, be inclined at an angle θ of inclination of from 10° to 45° with respect to a perpendicular line L to the laminated sheet 1. The method in which the cutting is performed by the heat cutter 8 traveling in the direction from the one end E1 to the other end E2 with itself crossing the laminated sheet, as described above, is preferable in that little heat escapes to thus enable ensuring that the cutting is performed with the cut surface being fine, as compared to an instance where the thermal cutting is performed with the heat cutter forced against the entire surface of the laminated sheet at a time. Further, the heat cutter 8 travels with itself inclined at the angle θ of inclination thereby to perform the cutting with a cut end in a state where the sheet of the thermoplastic resin composition 2, to its tip, adheres well to the tie rubber layer 3, so that the effect of the thermal cutting obtained by the present invention can become still greater. Therefore, this method is preferable.

According to the inventors' findings, the state of the cut end obtained by this method is as shown in the view in Part (b) of Fig. 3 as a model, and a tip 9 of the sheet of the thermoplastic resin composition 2 is generally obtained as extending to and curving around the tip side of the layer of the sheet of the tie rubber 3. This may be considered to be due to the fact that the heat cutter travels with itself inclined at the angle θ of inclination and thus the tip of the sheet of the thermoplastic resin composition 2 is melted and cut while being subjected to the action of pressure in a downward direction (or toward the tie rubber layer). Incidentally, according to the inventors' findings, even if the tip of the sheet of the thermoplastic resin composition 2 is in somewhat curved form as shown in Part (b) of Fig. 3, the sheet, when subjected to a tire cure-molding process, is pressed by a cure-molding bladder during the process, and thus, after all, the curved form is changed into a substantially straight form.

After the above-described cutting, when a single one of the laminated sheet 1 is used, the laminated sheet 1 is lap spliced at its ends to form an annular shape, or when a plurality of the laminated sheets 1 are used, the laminated sheets 1 are lap spliced together end to end to form an annular shape. The lap splicing may be performed while winding the laminated sheet around a tire making drum, or the lap splicing may be performed in advance to form the laminated sheet into an annular shape, which is then wrapped on the tire making drum.

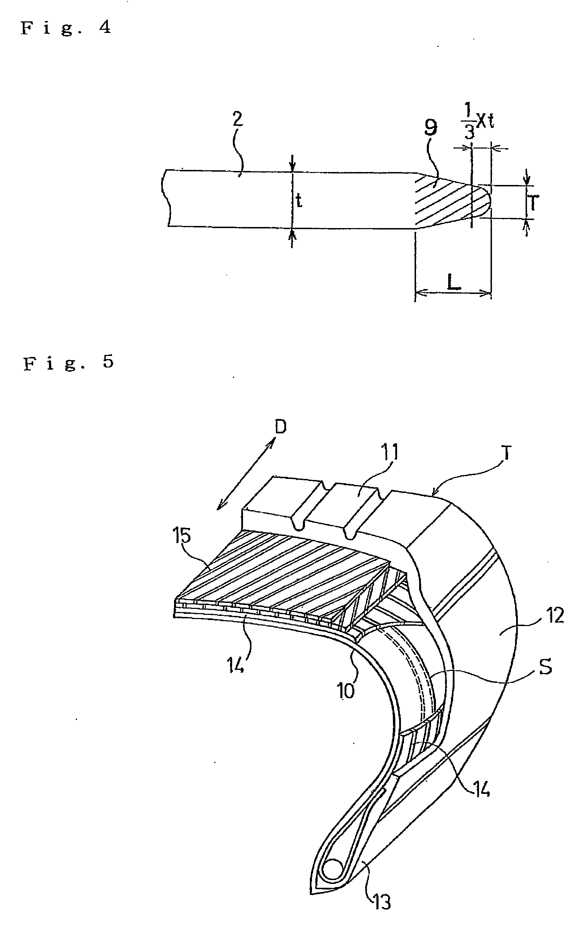

Fig. 5 is a partial cutaway perspective view showing an example of an embodiment of the pneumatic tire manufactured by the present invention.

A pneumatic tire T includes a side wall part 12 and a bead part 13 in a continuous fashion on each of the left and right sides of a tread part 11. Inside the tire, a carcass layer 14 serving as the tire's framework is provided extending in a tire widthwise direction between the left and right bead parts 13 and 13. Two belt layers 15 made of steel cords are provided on the outer circumferential side of a portion of the carcass layer 14 corresponding to the tread part 11. An arrow D indicates a tire circumferential direction.

An inner liner layer 10 is disposed on the inner side of the carcass layer 14, and a lap splice portion S is present extending in the tire widthwise direction. According to the method of the present invention, the development of a crack on the tire's inner circumferential surface, which has been likely to develop around the lap splice portion S, is suppressed. Moreover, the development of a crack and the occurrence of delamination between the thermoplastic resin composition 2 and the tie rubber layer 3 which collectively form the inner liner layer 10 are suppressed. Thus, durability is significantly improved. A length of overlap of the lap splice portion S is of the order of preferably 7 to 20 mm, or more preferably 8 to 15 mm, depending on tire size. The reason is that too long a length of overlap tends to lead to deterioration of tire's uniformity, whereas too short a length of overlap may cause the splice portion to be opened at the time of molding.

Also, as described above, according to the inventors' findings, even if the tip 9 of the sheet of the thermoplastic resin composition 2 is in somewhat curved form as shown in Part (b) of Fig. 3, the sheet, when subjected to the tire cure-molding process, is pressed by the cure-molding bladder during the process, and thus, after all, the curved form is changed into a substantially straight form. Fig. 4 shows an example of the shape of the side face of the sheet at the tip 9 of the sheet of the thermoplastic resin composition 2 in the cure-molded state. As shown in Fig. 4, a sharpened portion 9 gradually tapered toward the tip is formed in a vicinity of the tip of the sheet 2.

In the method of manufacturing a pneumatic tire of the present invention, it is more preferable to use the sheet 2 having the sharpened portion 9 formed in the vicinity of the tip thereof as shown in Fig. 4. Thereby, the upper and lower sheets 2 of the thermoplastic resin composition having high rigidity, which are present as a pair, become thin in thickness in the vicinity 4 of the tip shown in Part (b) of Fig. 2 and, also, the area of an interface between the sheet 2 of the thermoplastic resin composition and the rubber portion 3 becomes large, and thus, stress is distributed. For these reasons, stress produced in the rubber portion 3 sandwiched in between the sheets 2 is small and also distributed and is thus relieved. This prevents the occurrence of the phenomenon of delamination between the sheet 2 of the thermoplastic resin composition and the tie rubber sheet 3 cured and adhered thereto, after the tire starts to be used.

The shape of the sharpened portion 9, which is sharpened and gradually tapered toward the tip, may be somewhat "rounded" in the vicinity of the tip, and, even merely with such a rounded shape, the marked effect of preventing the development of a crack and the occurrence of delamination is observed. The tip-sharpened form of the sheet 2 at its tip is substantially maintained before and after cure-molding, and thus, after the tire starts to be used, the effect of preventing the development of a crack and the occurrence of delamination is effectively exhibited.

As described above, a tip sharpening process performed on the tip of the sheet 2 exhibits the effect even if the sharpened portion is somewhat rounded. However, particularly in order to achieve a great effect with stability, it is preferable that the tip sharpening be performed so that a thickness T (mm) of the sheet 2 at the position inward by a length of (t x 1/3) from the tip of the sheet 2 made of the thermoplastic resin composition obtained by blending the elastomer in the thermoplastic resin has a relationship satisfying 0.1t ≤ T ≤ 0.8t. Fig. 4 shows this relationship, which represents the relationship of the extent of the thickness of the sheet at the position inward by (t/3) from the tip thereof. More preferably, the relationship satisfies 0.2t ≤ T ≤ 0.6t. Here, t denotes an average thickness (mm), in the tire circumferential direction, of an unsharpened portion of the sheet 2 made of the thermoplastic resin composition obtained by blending the elastomer in the thermoplastic resin, and T denotes the thickness (mm) of the sheet 2 at the position inward by a length of (t x 1/3) from the tip of the sheet 2 made of the thermoplastic resin composition obtained by blending the elastomer in the thermoplastic resin.

Also, preferably, a length L of the tip-sharpened portion (indicated at 9 in Fig. 4) is such that L = (1.0 to 20) × t (mm), or equivalently, the tip-sharpened portion extends to a position inward by the length L. More preferably, the length L is such that L = (1.0 to 10) × t (mm), or still more preferably, L = (1.0 to 2.5) × t (mm).

Examples of the thermoplastic resin usable preferably in the present invention include: polyamide-based resins [for example, nylon 6 (N6), nylon 66 (N66), nylon 46 (N46), nylon 11 (N11), nylon 12 (N12), nylon 610 (N610), nylon 612 (N612), nylon 6/66 copolymers (N6/66), nylon 6/66/610 copolymers (N6/66/610), nylon MXD6 (MXD6), nylon 6T, nylon 9T, nylon 6/6T copolymers, nylon 66/PP copolymers, and nylon 66/PPS copolymers]; their N-alkoxyalkylates, for example, methoxymethylated nylon 6, methoxymethylated nylon 6/610 copolymers, and methoxymethylated nylon 612; polyester-based resins [for example, aromatic polyesters such as polybutylene terephthalate (PBT), polyethylene terephthalate (PET), polyethylene isophthalate (PEI), PET/PEI copolymers, polyarylate (PAR), polybutylene naphthalate (PBN), liquid crystal polyester, and polyoxyalkylene diimide diacid/polybutylene terephthalate copolymers]; polynitrile-based resins [for example, polyacrylonitrile (PAN), polymethacrylonitrile, acrylonitrile/styrene copolymers (AS), (meth)acrylonitrile/styrene copolymers, and (meth)acrylonitrile/styrene/butadiene copolymers]; polymethacrylate-based resins [for example, polymethyl methacrylate (PMMA) and polyethylmethacrylate]; polyvinyl-based resins [for example, polyvinyl acetate, polyvinyl alcohol (PVA), vinyl alcohol/ethylene copolymers (EVOH), polyvinylidene chloride (PVDC), polyvinyl chloride (PVC), vinyl chloride/vinylidene chloride copolymers, vinylidene chloride/methyl acrylate copolymers, and vinylidene chloride/acrylonitrile copolymers (ETFE)]; cellulose-based resins [for example, cellulose acetate and cellulose acetate butyrate]; fluororesins [for example, polyvinylidene fluoride (PVDF), polyvinyl fluoride (PVF), polychlorofluoroethylene (PCTFE), and tetrafluoroethylene/ethylene copolymers]; imide-based resins [for example, aromatic polyimide (PI)]; and the like.

Moreover, examples of the elastomer usable preferably in the present invention include: diene rubbers and their hydrogenated products [for example, natural rubbers (NR), isoprene rubber (IR), epoxidized natural rubbers, styrene-butadiene rubber (SBR), butadiene rubbers (BR, high-cis BR, and low-cis BR), nitrile rubber (NBR), hydrogenated NBR, and hydrogenated SBR]; olefin-based rubbers [for example, ethylene propylene rubbers (EPDM and EPM), maleic acid-modified ethylene propylene rubber (M-EPM), butyl rubber (IIR), copolymers of isobutylene and aromatic vinyl or diene monomer, acrylic rubber (ACM), and ionomers]; halogen-containing rubbers [for example, Br-IIR, CI-IIR, brominated isobutylene-co-para-methylstyrene (BIMS), chloroprene rubber (CR), hydrin rubber (CHR), chlorosulfonated polyethylene rubber (CSM), chlorinated polyethylene rubber (CM), and maleic acid-modified chlorinated polyethylene rubber (M-CM)]; silicone rubbers [for example, methyl vinyl silicone rubber, dimethyl silicone rubber, and methylphenylvinyl silicone rubber]; sulfur-containing rubbers [for example, polysulfide rubber]; fluororubbers [for example, vinylidene fluoride-based rubbers, fluorine-containing vinyl ether-based rubbers, tetrafluoroethylene-propylene-based rubbers, fluorine-containing silicone-based rubbers, and fluorine-containing phosphazene-based rubbers]; thermoplastic elastomers [for example, styrene-based elastomers, olefin-based elastomers, ester-based elastomers, urethane-based elastomers, and polyamide-based elastomers]; and the like.

At the time of blending in a combination of a specific one of the above-mentioned thermoplastic resins and a specific one of the above-mentioned elastomers, an appropriate compatibilizer may be used as a third component to make the thermoplastic resin and the elastomer compatible with each other if they are incompatible with each other. The interfacial tension between the thermoplastic resin and the elastomer decreases when such a compatibilizer is mixed in the blend system. As a result, the size of elastomer particles constituting the dispersion layer becomes finer. Accordingly, these two components exhibit their characteristics more effectively. In general, such a compatibilizer may have a copolymer structure including both or either of a structure of the thermoplastic resin and a structure of the elastomer, or a copolymer structure including an epoxy group, a carbonyl group, a halogen group, an amino group, an oxazoline group, or a hydroxyl group, which is capable of reacting with the thermoplastic resin or the elastomer. Such a compatibilizer may be selected depending on the types of the thermoplastic resin and the elastomer with which the compatibilizer is blended. Examples of the compatibilizer normally used include: styrene/ethylene-butylene block copolymers (SEBS) and their maleic acid-modified products; EPDM; EPM; EPDM/styrene or EPDM/acrylonitrile graft copolymers and their maleic acid-modified products; styrene/maleic acid copolymers; reactive phenoxine; and the like. The blending proportion of such a compatibilizer is not particularly limited, yet the blending proportion is preferably 0.5 to 10 parts by weight per 100 parts by weight of the polymer components (the total amount of the thermoplastic resin and the elastomer).

In the thermoplastic elastomer composition, the composition ratio of the specific thermoplastic resin to the specific elastomer is not particularly limited. This composition ratio may be set as appropriate in order that the thermoplastic elastomer composition can have a structure in which the elastomer is dispersed as a discontinuous phase in the matrix of the thermoplastic resin. This composition ratio is preferably in a range of 90/10 to 30/70 in weight ratio.

In the present invention, the thermoplastic resin composition obtained by blending the thermoplastic resin and the elastomer may be mixed with other polymers such as the compatibilizer, as long as the other polymers do not impair the characteristics needed for the inner liner. The purposes of mixing such other polymers are to improve the compatibility between the thermoplastic resin and the elastomer, to improve molding processability of the materials, to improve heat resistance, to reduce costs, and so on. Examples of materials used for such other polymers include polyethylene (PE), polypropylene (PP), polystyrene (PS), ABS, SBS, polycarbonate (PC), and the like. In addition, a filler (calcium carbonate, titanium oxide, alumina, or the like) generally blended in the polymer blend, a reinforcing agent such as carbon black and white carbon, a softener, a plasticizer, a processing aid, a pigment, a dye, an antioxidant, and the like may be blended optionally as long as the blended materials do not impair the characteristics needed for the inner liner.

The thermoplastic resin composition has a structure in which the elastomer is dispersed as a discontinuous phase in the matrix of the thermoplastic resin. Having such a structure, this thermoplastic resin composition can provide the inner liner both with sufficient flexibility and with sufficient rigidity based on the effect of a resin layer as a continuous phase. At the same time, when this thermoplastic resin composition is molded, the thermoplastic resin composition can achieve the molding processability equivalent to that of the thermoplastic resin, regardless of the amount of the elastomer.

Therefore, particularly when the thermal cutting is employed in the method of the present invention, the technical idea of coating the elastomer exposed on the cut surface with the thermoplastic resin caused to flow out over the cut surface exerts its effect.

The Young's modulus of each of the thermoplastic resin and the elastomer is not particularly limited, yet is set preferably to 1 to 500 MPa and more preferably to 50 to 500 MPa.

### EXAMPLES

### Examples 1 to 9 and Comparative Example 1

Hereinbelow, the method of manufacturing a pneumatic tire of the present invention will be described with reference to examples.

Note that each pneumatic tire was evaluated by observing a condition of development of a crack and a condition of occurrence of delamination around the splice portion of the inner liner layer in the cavity of the test tire, while comparing the conditions with those in other portions.

As each test tire, 215/70R15 98H was used. Two tires were prepared for each Example and Comparative Example. Each tire was mounted on a standard rim 15X6.5JJ specified in JATMA (Japan Automobile Tire Manufacturers Association), and a tire inner pressure was set to a maximum pneumatic pressure (240 kPa) specified in JATMA.

A sheet of 0.13 mm thick obtained by blending N6/66 as the thermoplastic resin and BIMS as the elastomer at a ratio of 50 to 50 by mass, as shown in Table 1, was used as the thermoplastic resin composition which constitutes the inner liner layer. Rubber of 0.7 mm thick as shown in Table 2 was used as the adhesive tie rubber which likewise constitutes the inner liner layer. A laminated sheet obtained by laminating the sheet of the thermoplastic resin composition and the tie rubber was prepared by being wound into a rolled shape. The melting point of the thermoplastic resin is 190°C.

At the time of lap splicing the laminated sheet and winding the laminated sheet around a tire making drum, in Example 1, the cutting of the laminated sheet to a desired length was performed by thermal cutting (at a cutting temperature of 300°C) using a heat cutter (an electrically-heated wire cutter (0.6 mm in diameter)), and in this case, the angle θ of inclination shown in Part (a) of Fig. 3 was set equal to 20°. In Comparative Example 1, the cutting of the laminated sheet was performed by using an edge tool type cutter at room temperature.

The cut end face of each of the laminated sheets of Example 1 and Comparative Example 1 was observed by X-ray photoelectron spectroscopy (XPS). In the product of Example 1, it has been shown that BIMS as the elastomer present on the cut end face is completely covered with N6/66 as the thermoplastic resin which has melted and flowed, and also that the tip of the sheet of the thermoplastic resin composition is in a form adhering to the tie rubber layer and extending to and somewhat curving around the tip side of the tie rubber layer, as shown in Part (b) of Fig. 3. In the product of Comparative Example 1, it has been shown that BIMS as the elastomer present on the cut end face is exposed as it is. Also, the tip of the sheet of the thermoplastic resin composition of the product of Comparative Example 1 was not particularly in a form adhering to the tie rubber layer.

As Examples 2 to 9, the cutting of each of the laminated sheets was performed in the same manner as Example 1, varying the diameter of the electrically-heated wire cutter, the cutting temperature, and the angle θ of inclination, as shown in Table 3, as is the case with Example 1. The cutting conditions are shown in Table 3. Each pneumatic tire was manufactured by lap splicing each laminated sheet with an overlap length of 10 mm on the tire making drum, and, otherwise, using the same method as a conventional tire cure-molding method.

The tip of each sheet 2 after the cure-molding was observed. In each of the tires of the products of Examples 1 to 9, it has been shown that, because the sheet is pressed by a cure-molding bladder during the tire cure-molding process, the above-described curved tip of the sheet of the thermoplastic resin composition changes into a non-curved form and is sharpened and thus, after the process, the tip is in a substantially straight sharpened form and also in a form adhering to the tie rubber layer in the vicinity of the sharpened portion. Measurements were made on the sharpened form (after the cure-molding) to measure the thickness T (mm) of the sheet 2, the T/t ratio representing the shape of the tip, and the length L of the tip-sharpened portion, shown in Fig. 4. The measured results are shown in conjunction in Table 3.

After running of a distance of 20,000 km under a load of 7.35 kN, each pneumatic tire thus obtained was examined for the presence or absence of development of a crack and occurrence of delamination around the splice portion of the inner liner layer in the cavity of the test tire, while these conditions were compared to those in other portions.

As a result, in the product of Comparative Example 1, after the running of a distance of 20,000 km, a crack was developed around the splice portion, and further, after running of an accumulated distance of 50,000 km, the crack grew into delamination between the thermoplastic resin composition sheet and the tie rubber. At that point in time, portions other than around the splice portion presented no particular problem and were in good condition.

Meanwhile, in each of the products of Examples 1 to 9 of the present invention, even after the running of a distance of 50,000 km, no particular problem arose around the splice portion and in any portion other than around the splice portion.

**[Table 1]**

| | | Part by mass |
|---|---|---|
| BIMS^{a)} | "Exxpro 3035" available from ExxonMobil Chemical Corporation | 100 |
| Zinc oxide | "Zinc white No. 3" available from Seido Chemical Industry Co., Ltd. | 0.5 |
| Stearic acid | Stearin | 0.2 |
| Zinc stearate | "Zinc stearate" available from NOF Corporation | 1 |
| N6/66 | "UBE NYLON 5033B" available from Ube Industries, Ltd. | 100 |
| Modified EEA^{b)} | "HPR-AR201" available from Dupont-Mitsui Polychemicals Co., Ltd. | 10 |

| | | |
|---|---|---|
| Remarks: a) Brominated isobutylene-co-para-methylstyrene b) Maleic anhydride modified ethylene-ethyl acrylate copolymers | | |

**[Table 2]**

| | | Part by mass |
|---|---|---|
| Styrene-butadiene rubber | "Nipol 1502" available from ZEON Corporation | 50 |
| Natural rubber | SIR-20 | 50 |
| Carbon black | "SEAST V" available from Tokai Carbon Co., Ltd. | 60 |
| Stearic acid | Stearin | 1 |
| Aromatic oil | "Desolex No. 3" available from Showa Shell Sekiyu K. K. | 7 |
| Zinc oxide | "Zinc white No. 3" available from Seido Chemical Industry Co., Ltd. | 3 |
| Modified resorcinol formaldehyde condensate | "Sumikanol 620" available from Taoka Chemical Company, Limited | 2 |
| Methylene donor | Modified etherified methylol melamine "Sumikanol 507AP" available from Taoka Chemical Company, Limited | 6 |
| Sulfur | 5% oil extended sulfur | 6 |
| Vulcanization accelerator | di-2-benzothiazole disulfide "Nocceler DM" available from Ouchi Shinko Chemical Industrial Co., Ltd. | 2.2 |

**[Table 3]**

| | Diameter of Electrically-Heated Wire Cutter (mm) | Cutting Temperature (°C) | Angle θ of Inclination (°) | Thickness T (mm) | Shape of Tip T/t | Tip Length L (mm) | Tip Length Ratio L/t | Effect |
|---|---|---|---|---|---|---|---|---|
| Comparative Example 1 | 0.6 | 300 | 60 | 0.13 | 1.0 | 0 | 0 | Crack developed |
| Example 1 | 0.6 | 190 | 20 | 0.04 | 0.31 | 0.3 | 2.3 | Good |
| Example 2 | 0.6 | 190 | 10 | 0.05 | 0.38 | 0.8 | 6.2 | Good |
| Example 3 | 0.6 | 190 | 45 | 0.03 | 0.23 | 1.0 | 7.7 | Good |
| Example 4 | 0.6 | 190 | 45 | 0.02 | 0.15 | 1.2 | 9.2 | Good |
| Example 5 | 0.6 | 250 | 10 | 0.08 | 0.62 | 0.2 | 1.5 | Good |
| Example 6 | 0.6 | 250 | 45 | 0.06 | 0.46 | 0.3 | 2.3 | Good |
| Example 7 | 0.6 | 300 | 10 | 0.08 | 0.62 | 0.2 | 1.5 | Good |
| Example 8 | 0.6 | 300 | 45 | 0.06 | 0.46 | 0.3 | 2.3 | Good |
| Example 9 | 0.3 | 300 | 10 | 0.10 | 0.77 | 0.2 | 1.5 | Good |

### REFERENCE SIGNS LIST

1 laminated sheet
2 thermoplastic resin composition obtained by blending thermoplastic resin and elastomer
3 tie rubber layer
4 vicinity of tip of sheet of thermoplastic resin composition 2
5 elastomer
6 thermoplastic resin
7 coating layer of thermoplastic resin coating thermally cut surface
8 heat cutter
9 tip of sheet of thermoplastic resin composition 2 (after thermal cutting)
10 inner liner layer
11 tread part
12 side wall part
13 bead
14 carcass layer
15 belt layer
D direction of travel of heat cutter
L perpendicular line to laminated sheet
S lap splice portion

## Claims

1. A method of manufacturing a pneumatic tire, comprising the step of cutting a laminated sheet (1) at a predetermined length, the laminated sheet (1) being obtained by laminating a sheet made of a thermoplastic resin composition (2) obtained by blending a thermoplastic resin (6) and an elastomer (5), with rubber which is cured and adhered to the thermoplastic resin composition (2);
lap splicing end portions of the laminated sheet (1);
and further cure-molding the laminated sheet (1) to form an inner liner layer (10),
**characterized in that** the cutting of the laminated sheet (1) to the predetermined length is effected by thermal cutting at a temperature equal to or higher than the melting point of the thermoplastic resin (6).

2. The method of manufacturing a pneumatic tire according to claim 1,
**characterized in that** when the thermal cutting is performed,
the thermal cutting is performed on a cut surface obtained by the thermal cutting, in such a manner that heat of the thermal cutting causes the thermoplastic resin (6) to flow out over the cut surface and cover the entire area of the cut surface including at least the elastomer (5) present on the cut surface.

3. The method of manufacturing a pneumatic tire according to claim 1 or 2,
**characterized in that** a heat cutter (8) is used for the thermal cutting.

4. The method of manufacturing a pneumatic tire according to claim 3,
**characterized in that** an electrically-heated wire cutter is used as the heat cutter (8).

5. The method of manufacturing a pneumatic tire according to claim 3 or 4,
**characterized in that** when the heat cutter (8) is used for the thermal cutting, the thermal cutting is accomplished by causing the heat cutter (8) to travel from one end to the other end of the laminated sheet (1), with the heat cutter (8) in contact with a side face of the laminated sheet (1) in such a way as to cross the laminated sheet (1), extending across space above and below the laminated sheet (1), and with the heat cutter (8) inclined in a direction of travel of the heat cutter (8).

6. The method of manufacturing a pneumatic tire according to claim 5,
**characterized in that** the heat cutter (8), when traveling, is inclined at an angle θ of inclination of from 10° to 45° with respect to a perpendicular line (L) to the laminated sheet (1).

7. The method of manufacturing a pneumatic tire according to any one of claims 1 to 6,
**characterized in that** the thermal cutting is a process which involves sharpening a side configuration of a tip of the sheet made of the thermoplastic resin composition (2), and the sharpened side configuration is such that a thickness T (mm) of the sheet at a position inward by a length of (t x 1/3) has a relationship satisfying 0.1t ≤ T ≤ 0.8t, where
t denotes an average thickness (mm), in a tire circumferential direction, of an unsharpened portion of the sheet made of the thermoplastic resin composition (2) obtained by blending the elastomer (5) in the thermoplastic resin (6), and
T denotes the thickness (mm) of the sheet at the position inward by a length of (t x 1/3) from the tip of the sheet made of the thermoplastic resin composition (2) obtained by blending the elastomer (5) in the thermoplastic resin (6).

## Patentansprüche

1. Verfahren zum Herstellen eines Luftreifens, das den Schritt aufweist: Zuschneiden einer laminierten Bahn (1) auf eine vorgegebene Länge, wobei die laminierte Bahn (1) durch Laminieren einer Bahn, die aus einer thermoplastischen Harzzusammensetzung (2), die durch Mischen eines thermoplastischen Harzes (6) und eines Elastomers (5) erhalten wird, mit Gummi erhalten wird, das gehärtet und an die thermoplastischen Harzzusammensetzung (2) geklebt wird; Überlappungsspleißen von Endabschnitten der laminierten Bahn (1) ; und
ferner Härtungsformen der laminierten Bahn (1), um eine Innenabdichtungslage (10) zu bilden,
**dadurch gekennzeichnet, dass** das Zuschneiden der laminierten Bahn (1) auf die vorgegebene Länge durch thermisches Schneiden bei einer Temperatur ausgeführt wird, die gleich oder höher als der Schmelzpunkt des thermoplastischen Harzes (6) ist.

2. Verfahren zum Herstellen eines Luftreifens nach Anspruch 1,
**dadurch gekennzeichnet, dass** bei der Durchführung des thermischen Schneidens das thermische Schneiden an einer durch das thermische Schneiden erhaltenen Schnittfläche in einer solchen Weise durchgeführt wird, dass die Wärme des thermischen Schneidens bewirkt, dass das thermoplastische Harz (6) über die Schnittfläche herausfließt und den gesamten Bereich der Schnittfläche einschließlich mindestens des Elastomers (5) bedeckt, das an der Schnittfläche vorhanden ist.

3. Verfahren zum Herstellen eines Luftreifens nach Anspruch 1 oder 2,
**dadurch gekennzeichnet, dass** eine Heißschneidvorrichtung (8) für das thermische Schneiden verwendet wird.

4. Verfahren zum Herstellen eines Luftreifens nach Anspruch 3,
**dadurch gekennzeichnet, dass** ein elektrisch geheizter Drahtschneider als die Heißschneidvorrichtung (8) verwendet wird.

5. Verfahren zum Herstellen eines Luftreifens nach Anspruch 3 oder 4,
**dadurch gekennzeichnet, dass** wenn die Heißschneidvorrichtung (8) für das thermische Schneiden verwendet wird, das thermische Schneiden ausgeführt wird, indem bewirkt wird, dass sich die Heißschneidvorrichtung (8) von einem Ende zum anderen Ende der laminierten Bahn (1) bewegt, wobei sich die Heißschneidvorrichtung (8) mit einer Seitenfläche der laminierten Bahn (1) in einer solchen Weise in Kontakt befindet, dass die laminierte Bahn (1) durchquert wird, wobei sie sich über einen Raum über und unter der laminierten Bahn (1) erstreckt, und wobei die Heißschneidvorrichtung (8) in eine Bewegungsrichtung der Heißschneidvorrichtung (8) geneigt ist.

6. Verfahren zum Herstellen eines Luftreifens nach Anspruch 5,
**dadurch gekennzeichnet, dass** die Heißschneidvorrichtung (8) bei der Bewegung unter einem Neigungswinkel θ von 10° bis 45° bezüglich einer senkrechten Linie (L) zur laminierten Bahn (1) geneigt ist.

7. Verfahren zum Herstellen eines Luftreifens nach einem der Ansprüche 1 bis 6,
**dadurch gekennzeichnet, dass** das thermische Schneiden ein Prozess ist, der das Schärfen einer seitlichen Beschaffenheit einer Spitze der Bahn umfasst, die aus der thermoplastischen Harzzusammensetzung (2) besteht, und die geschärfte seitliche Beschaffenheit so gestaltet ist, dass eine Dicke T (mm) der Bahn an einer um eine Länge von (t x 1/3) nach innen liegenden Position eine Beziehung aufweist, die 0,1t ≤ T ≤ 0,8t erfüllt, wobei
t eine durchschnittliche Dicke (mm) in eine Reifenumfangsrichtung eines nicht geschärften Abschnitts der Bahn bezeichnet, die aus der thermoplastischen Harzzusammensetzung (2) besteht, die durch Mischen des Elastomers (5) in das thermoplastische Harz (6) erhalten wird, und
T die Dicke (mm) der Bahn an einer um eine Länge von (t x 1/3) von der Spitze der Bahn nach innen liegenden Position bezeichnet, die aus der thermoplastischen Harzzusammensetzung (2) besteht, die durch Mischen des Elastomers (5) in das thermoplastische Harz (6) erhalten wird.

## Revendications

1. Procédé de fabrication d'un pneumatique, comprenant l'étape de découpe d'une feuille stratifiée (1) à une longueur définie, ladite feuille stratifiée (1) étant obtenue par laminage d'une feuille en composite de résine thermoplastique (2) obtenu en mélangeant une résine thermoplastique (6) et un élastomère (5) avec du caoutchouc vulcanisé et mis en adhérence avec le composite de résine thermoplastique (2) ;
jointement à recouvrement des parties d'extrémité de la feuille stratifiée (1) ; et en outre vulcanisation en moule de la feuille stratifiée (1) pour former une couche de calandrage intérieure (10),
**caractérisé en ce que** la découpe de la feuille stratifiée (1) à la longueur définie est exécutée par découpe thermique à une température égale ou supérieure au point de fusion de la résine thermoplastique (6).

2. Procédé de fabrication d'un pneumatique selon la revendication 1,
**caractérisé en ce que**, lorsque la découpe thermique est exécutée, ladite découpe thermique est effectuée sur une surface de découpe obtenue par la découpe thermique de sorte que la chaleur de la découpe thermique entraîne l'écoulement de la résine thermoplastique (6) sur la surface de découpe et la couverture par celle-ci de toute la surface de découpe comprenant au moins l'élastomère (5) présent sur la surface de découpe.

3. Procédé de fabrication d'un pneumatique selon la revendication 1 ou la revendication 2,
**caractérisé en ce qu'**un cutter thermique (8) est utilisé pour la découpe thermique.

4. Procédé de fabrication d'un pneumatique selon la revendication 3,
**caractérisé en ce que** qu'un cutter à fil électriquement chauffé est utilisé comme cutter thermique (8).

5. Procédé de fabrication d'un pneumatique selon la revendication 3 ou la revendication 4,
**caractérisé en ce que** lorsque le cutter thermique (8) est utilisé pour la découpe thermique, ladite découpe thermique est effectuée en provoquant le déplacement du cutter thermique (8) d'une extrémité à l'autre extrémité de la feuille stratifiée (1), le cutter thermique (8) étant en contact avec une face latérale de la feuille stratifiée (1) de manière à traverser la feuille stratifiée (1), en s'étendant dans l'espace au-dessus et en dessous de la feuille stratifiée (1), et le cutter thermique (8) étant incliné suivant une direction de déplacement du cutter thermique (8).

6. Procédé de fabrication d'un pneumatique selon la revendication 5,
**caractérisé en ce que** lorsqu'il est déplacé, le cutter thermique (8) est incliné suivant un angle d'inclinaison θ compris entre 10° et 45° par rapport à une ligne perpendiculaire (L) à la feuille stratifiée (1).

7. Procédé de fabrication d'un pneumatique selon l'une des revendications 1 à 6,
**caractérisé en ce que** la découpe thermique est un processus impliquant l'effilage d'une configuration latérale d'un bout de la feuille en composite de résine thermoplastique (2), et **en ce que** la configuration latérale effilée est telle qu'une épaisseur T (mm) de la feuille à un emplacement décalé vers l'intérieur d'une longueur de (t x 1/3) satisfait à la relation 0,1t ≤ T ≤ 0,8t, où t renvoie à une épaisseur moyenne (mm), dans une direction circonférentielle du pneu, d'une partie non effilée de la feuille en composite de résine thermoplastique (2) obtenue par mélange de l'élastomère (5) dans la résine thermoplastique (6), et où
T renvoie à l'épaisseur (mm) de la feuille à l'emplacement décalé vers l'intérieur d'une longueur de (t x 1/3) depuis le bout de la feuille en composite de résine thermoplastique (2) obtenue par mélange de l'élastomère (5) dans la résine thermoplastique (6).
